Europäisches Patentamt

European Patent Office

Office européen des brevets

(19)

(11) Veröffentlichungsnummer: **0 208 062**
**B1**

(12) **EUROPÄISCHE PATENTSCHRIFT**

(45) Veröffentlichungstag der Patentschrift: 02.01.91

(21) Anmeldenummer: 86104348.7

(22) Anmeldetag: 29.03.86

(51) Int. Cl.⁵: **G 11 B 33/04, G 11 B 23/02**

(54) Behälter für eine Mehrzahl scheibenförmiger Gegenstände und Behälterteil davon.

(30) Priorität: 09.07.85 DE 3524419

(43) Veröffentlichungstag der Anmeldung:
14.01.87 Patentblatt 87/03

(45) Bekanntmachung des Hinweises auf die
Patenterteilung:
02.01.91 Patentblatt 91/01

(84) Benannte Vertragsstaaten:
AT DE FR GB IT NL SE

(56) Entgegenhaltungen:
WO-A-86/00061
DE-A-2 155 715
DE-A-2 541 411
DE-A-3 429 244
US-A-4 369 883

(73) Patentinhaber: BASF Aktiengesellschaft
Carl-Bosch-Strasse 38
D-6700 Ludwigshafen (DE)

(72) Erfinder: Böhm, Udo
Am Weidenschlag 6
D-6700 Ludwigshafen (DE)
Erfinder: Schäfer, Dieter, Dr.
Hauptstrasse 173
D-6731 Lindenberg (DE)
Erfinder: Weber, Adam
Eichenstrasse 10
D-6700 Ludwigshafen (DE)

EP 0 208 062 B1

**Beschreibung**

Die Erfindung betrifft einen Behälter für eine Mehrzahl von scheibenförmigen Gegenständen, insbesondere Aufzeichnungsträgern, bestehend aus einem an wenigstens zwei Seiten offenen Grundkörper mit einer Mehrzahl von Aufnahmerillen für die Gegenstände und aus wenigstens einem Deckelteil sowie aus zwischen Grundkörper und Deckelteil(en) vorgesehenen lösbaren Verriegelungeinrichtungen, und einen Behälterteil davon.

Es ist ein derartiger Behälter für Speicherscheiben bekannt, der aus einem mittels eines Deckels verschließbaren Kasten besteht, in dem eine Vielzahl von parallel zueinander liegenden Rillen angebracht ist, deren lichte Weite der Breite einer Datenträgerplatte entspricht und die entsprechend den Abmessungen der Datenträgerplatten verlaufen, und der mindestens zwei dünne voneinander getrennte, in das Innere des Behälters ragende elastisch verformbare Vorsprünge aufweist, die sich quer zur Richtung der Rillen über den gesamten Bereich erstrecken, in dem Rillen vorhanden sind, und die bei in den Behälter eingesetzten Datenträgerplatten an mindestens zwei in Umfangsrichtung gegeneinander vesetzten Stellen an denselben satt anliegen (DE-A-34,29,244).

In diesem bekannten Behälter können die Platten gegen Verschmutzung und mechanische Beschädigung geschützt untergebracht werden. Die in diesen Behälter angebrachten Rillen halten die Platten auf Abstand, so daß sie sich beim Transport des Behälters nicht berühren können. Durch die elastisch verformbaren Vorsprünge werden die Platten in die Rillen gedrückt und so in ihrer Position fixiert. Die Vorsprünge sind bei dem bekannten Behälter als relativ materialarme Lamellen ausgebildet, deren Elastizität schnell nachläßt. Außerdem können die dünnen Lamellen leicht abbrechen, so daß die Platten dann nicht mehr ausreichend geschützt sind. Der Kasten dieses Behälters ist insgesamt so hoch wie die mit ihm zu transportierenden Platten. Daraus ergibt sich der Nachteil, daß die Platten nur mit Schwierigkeiten in den Kasten einsetzbar sind. Außerdem ist der Kasten dadurch schlecht zu reinigen. Um die unbedingt erforderliche Reinigung zu erleichtern, hat der bekannte Behälter einen abnehmbaren Boden. Dadurch wird der Behälter insgesamt aufwendig, da mit Kasten, Deckel und Boden drei unterschiedlich aufgebaute und getrennt herzustellende Teile benötigt werden.

Mit de WO-A-86/00746 ist ein Behälter für dünne Gegenstände, insbesondere FlexyDisks® (®eingetragenes Warenzeichen der BASF Aktiengesellschaft) bekannt, wobei zwei äußerlich identische Behälterhälften einen allseitig geschlossenen, mit Aufnahmeelementen für die FlexyDisks versehenen Behälter bilden. Die Aufnahmeelemente sind durch im Querschnitt L-förmige Elemente mit Nuten für die Kanten einer FlexyDisk gebildet, wobei die Elemente in jeder Behälterhälfte angeordnet sind. Dadurch ist der Abstand zwischen den einzelnen FlexyDisks in jeder Hälfte größer, als wenn jede der Hälften einen Einzelbehälter bildete. Die Hälften sind gelenkig miteinander verbindbar. Dieser Behälter ist ein reiner Archivbehälter und aufgrund seiner vielen Einzelteile ebenfalls nur aufwendig herstellbar.

Scheibenförmige Gegenstände im Rahmen der vorliegenden Erfindung können beliebige Scheibenkörper wie, z.B. gedruckte Schaltungen, Wafers für integrierte Schaltungen usw. oder auch jede Art von scheiben- oder plattenförmigen Aufzeichnungsträgern sein wie Magnetplatten, optische, magnetooptische, oder elektrische Speicherplatten für Speicherzwecke beliebiger Informationen, in analoger, digitaler oder bildlicher Form.Anhand von Datenträgerplatten wird im folgenden der Zweck eines Behälters nach der Gattung vorliegender Erfindung erläutert.

"Datenträgerplatten" - im folgenden kurz als "Platten" bezeichnet - können beispielsweise Magnetspeicherplatten für EDV-Anlagen sein, die einen beschichteten Metallkörper aufweisen. Bei den Platten kann es sich aber auch um andere, einen beschichteten, steifen Grundkörper aufweisende Datenträger handeln, wie beispielsweise sogenannte Digitalmagnetplatten. Die für die Speicherung von Daten vorhandene Schicht ist sehr empfindlich. Die Platten müssen daher schom im Herstellerwerk, bei der Herstellung, beim Transport vom Herstellerwerk zum Verbraucher, aber auch später sehr sorgfältig behandelt werden. Dabei ist insbesondere darauf zu achten, daß die empfindliche Beschichtung nicht beschädigt wird.

Der Erfindung liegt die Aufgabe zugrunde, einen Behälter bereitzustellen, der die zu umfassenden oder zu umschließenden Scheiben wirksam schützt, bei besserer Zugänglichkeit, und der vielseitig verwendbar ist.

Die Aufgabe wird mit einem Behälter der eingangs definierten Art gelöst, wenn der Grundkörper aus zwei zusammensetzbaren, jeweils im wesentlichen gleichen Teilen besteht und zwei weitere, jeweils im wesentlichen gleiche Deckelteile vorgesehen sind, wobei jeder Deckelteil mindestens eine der Öffnungen des Grundkörpers mindestens teilweise abdeckt und die Verriegelungseinrichtungen zumindest an einem Deckelteil vorgesehen sind, mittels der die beiden Teile des Grudkörpers lösbar miteinander verriegelbar sind.

Damit wird ein Mehrzweckbehälter geschaffen, der für Transport, Lagerung, Zwischenablage und Entnahme von hochempfindlichen Scheiben per Hand und maschinell gleichermaßen geeignet ist und für Hersteller und Anwender der Scheiben unentbehrlich ist.

Es wird vorteilhaft die Entnehmbarkeit mehrerer oder einzelner Scheiben dadurch ermöglicht, daß z.B. Kreisscheiben an ihren Außendurchmessern klemmend und ergreifbar und schnell und ohne Gefahr einer Beschädigung oder Verschmutzung heraushebbar werden.

Durch die günstige konstruktive Gestaltung des Behälters, wie auch aus dem folgenden hervorgeht, können die Herstellkosten solcher Behälter erheblich gesenkt werden.

Der erfindungsgemäße Behälter besteht zwar insgesamt aus vier Teilen. Da dieselben jedoch paarweise im wesentlichen gleich oder sogar identisch sind, brauchen nur zwei unterschiedlich gestaltete Teile hergestellt zu werden. Der Fertigungsaufwand ist also gering, und es brauchen nur zwei unterschiedliche Teile bevorratet zu werden. Der Behälter läßt sich einfach reinigen, wenn die Grundkörperteile nur etwa die halbe Höhe des Behälters einnehmen und daher innen leicht zugänglich sind. Die Deckelteile sind für eine Reinigung unproblematisch, da sie von allen Seiten zugänglich ausbildbar sind.

Ein weiterer Vorteil dieses Behälters besteht darin, daß im Falle der Beschädigung eines Teils dasselbe wegen der im wesentlichen paarweisen Identität leicht austauschbar ist.

In praktischer Ausgestaltung weisen die Deckelteile im Seitenriß L-Form auf, und jeder Arm der L-Form umfaßt eine Seite des Grundkörpers im Seitenriß.

Dadurch sind die Deckeleile einfach und wirtschaftlich herstellbar und leicht zu reinigen.

Im weiteren kann jeder Arm der L-Form mit Verriegelungselementen, insbesondere Aussparungen ausgebildet sein, während die umgriffenen Seitenflächen der Grundkörperteile mit entsprechenden Verriegelungselementen, insbesondere mit Vorsprüngen, ausgebildet sein können.

Damit wird bereits durch ein Deckelteil eine Verbindung der beiden Grundkörperteile herstellbar.

In weiterer Ausbildung kann jeweils der die eine der zwei Öffnungen des Grundkörpers verschließende Arm der L-Form-Deckelteile mit den Aufnahmerillen des Grundkörpers zugeordneten Halteeinrichtungen ausgebildet sein.

Dadurch wird eine rüttelsichere Lage der Scheiben bei geschlossenem Behälter erreicht. Praktisch können die Halteeinrichtungen als Einbuchtungen oder Ausbuchtungen am Arm des Deckelteils gestaltet sein.

Praktisch können die Halteeinrichtungen als mindestens ein federelastisches Element, insbesondere als Einbuchtung des Deckelteils mit U- oder Wannenquerschnittsform.

Zweckmäßig können die Aufnahmerillen der Grundkörperteile und/oder die Gegenstücke der Halteeinrichtung etwa trapezförmigen Querschnitt aufweisen, wodurch die Scheiben schonend einsetzbar und eng tolerierbar aufzubewahren sind. Günstig ist eine Ausführung, in der der Boden der Aufnahmerillen an den Grundkörperteilen annähernd eine Kreisbogen-Fläche und insbesondere eine unterbrochene Kreisbogen-Fläche aufweist.

In weiterer herstellungsmäßig und als Lagerung für Kreisscheiben günstigen Ausbildung kann der Boden der Aufnahmerillen als ebene Fläche, insbesondere als mehrere, voneinander beabstandete Flächenstücke ausgebildet sein.

Wegen seiner besseren und raumsparenden Handhabung, Archivierung und Transportierung können die Teile des Grundkörpers zumindest in der Nähe der wenigstens zwei Öffnungen des Grundkorpers mit Stapeleinrichtungen ausgebildet sein.

Konstruktiv können die Stapeleinrichtungen miteinander flächig und/oder räumlich verschachtelbare Wandteile der Grundkörperteile sein.

Praktisch können die Stapeleinrichtungen an den Grundkörperteilen derartig angeordnet sein, daß eine Symmetrie zur vertikalen Mittelachse des Seitenrisses zweier aufeinander gestapelter Grundkörperteile besteht.

Vorteilhaft können die Stapeleinrichtungen deckungsgleich angeordnete Vorsprünge und Vertiefungen sein, die derartig angeordnet sind, daß einer von beiden Grundkörperteilen um 180° in der Horizontale gegenüber dem anderen Grundkörperteil gedreht und nach weiterer 180° Drehung in der Vertikalebene auf den anderen Grundkörperteil aufgesetzt ein Ineingriffkommen der einzelnen Stapelelemente bewirkt.

Damit ergibt sich eine gute Stapelbarkeit bei Herstellung gleicher Grundkörperteile.

In praktischer Ausführung können die Stapeleinrichtungen wenigstens teilweise aus Dichtstegen und -nuten bestehen, die an zumindest einem Öffnungsrand eines Grundkörperteils und parallel zum Rand vorgesehen sein, so daß sich eine gute Dichtung der Teilungsfuge ergibt, die eine nahezu vollständige Abschirmung dadurch gewährleistet, daß an nahezu keiner Stelle ein direkter Wanddurchgang von innen nach außen oder umgekehrt existiert.

In weiterer praktischer Ausgestaltung können die Stapeleinrichtungen wenigstens teilweise aus am Öffnungsrand vorgesehenen Konturstegen und entsprechenden Ausschnitten bestehen, so daß es möglich ist, die einzelnen Grundkörperteile auch zusammen mit aufgesetztem Deckelteil zu stapeln.

Wenn sowohl die Dichtstege und -nuten als auch die Konturstege und Ausschnitte am selben Grundkörperteil verwendet werden, ergibt sich mit gleichen Teilen eine zweifache Stapelmöglichkeit mit unterschiedlichen Stapelelementen nach oben und unten. Zur besseren seitlichen Abstützung übereinandergestapelter Grundkorperteile können im Wanddickenabstand angeordnete Stutzelemente jeweils im Bereich der Ausschnitte vorgesehen sein und in der Hohe über die Ausschnittkontur hervorragen.

Zweckmaßig kann parallel zum äußeren Öffnungsrand ein innerer Öffnungsrand vorgesehen sein, der vom Deckelteil, insbesondere haubenartig, verschließbar ist, wodurch ein Verschluß der Öffnung(en) ohne Verlust der Stapelbarkeit möglich wird.

Zweckmaßig kann die Höhe des Deckelteils (L-Arm) in Verschlußposition niedriger gewählt sein als die Höhe des Kontursteges bzw. der Stützelemente. Dadurch wird erreicht, daß die Grundkörperteile auch, wenn sie einseitig vom Deckelteil verschlossen sind, stapelbar sind, auch mit dazwischenliegendem Deckelteil. Dadurch wird die Handhabung verbessert und das volumenmäßige Lager oder Archivierungsproblem ausgezeichnet gelöst.

Zweckmäßig sind die Deckelteile zumindest im Bereich der die Öffnung des Grundkorperteils abdeckenden Wand schmaler als der Abstand der langen Seiten des äußeren Öffnungsrandes voneinander.

Die Erfindung bezieht sich auch auf die zweckmäßige Ausgestaltung eines der Behälter- oder Tragteile, wenn dieses gekennzeichnet ist durch einen etwa rechteckigen, aus Wänden bestehenden Rahmen, durch Aufnahmerillen für die scheibenförmigen Gegenstande an den Innenseiten zweier, einander gegenüberliegender Wände und durch Stapeleinrichtungen an wenigstens einem Stirnrand der beiden einander gegenüberliegenden Wände zum Übereinanderstapeln mehrerer Behälterteile.

Die Erfindung wird nachfolgend anhand von in der Zeichnung dargestellten Ausführungsbeispielen beschrieben.

Es zeigen:

Fig. 1 eine Frontansicht eines verschlossenen Behälters nach der Erfindung

Fig. 2 eine Seitenansicht des Behälters, teilweise geschnitten

Fig. 3 einen Schnitt durch den Behälter nach Fig. 2 längs der Linie III—III

Fig. 4 und 5 den Verschlußteil, wobei Fig. 5 eine Ansicht von Fig. 4 in Richtung des Pfeiles A ist

Fig. 6 und 7 den Tragteil, wobei Fig. 7 ein Schnitt durch Fig. 6 längs der Linie VII—VII ist

Fig. 8 eine Variante eines Behälters nach der Erfindung

Fig. 9 der Behälter aus Fig. 8 in Einzelteildarstellung in Seitenansicht

Fig. 10 ein Querschnitt des Behälters aus Figur 8 gemäß Schnittlinie X—X

Fig. 11 der Behälter gemäß Fig. 8 in Einzelteildarstellung in Vorderansicht

Fig. 12 eine Draufsicht auf einen Grundkörperteil mit unten angeordnetem Deckelteil

Fig. 13 eine Vorderansicht eines kompletten Behälters einschließlich der Deckelteile und einem aufgesetzten, weiteren Grundkörperteil

Fig. 14 a und b schematische Seitenansichten (in verkleinertem Maßstab) von je zwei gestapelten Behältern.

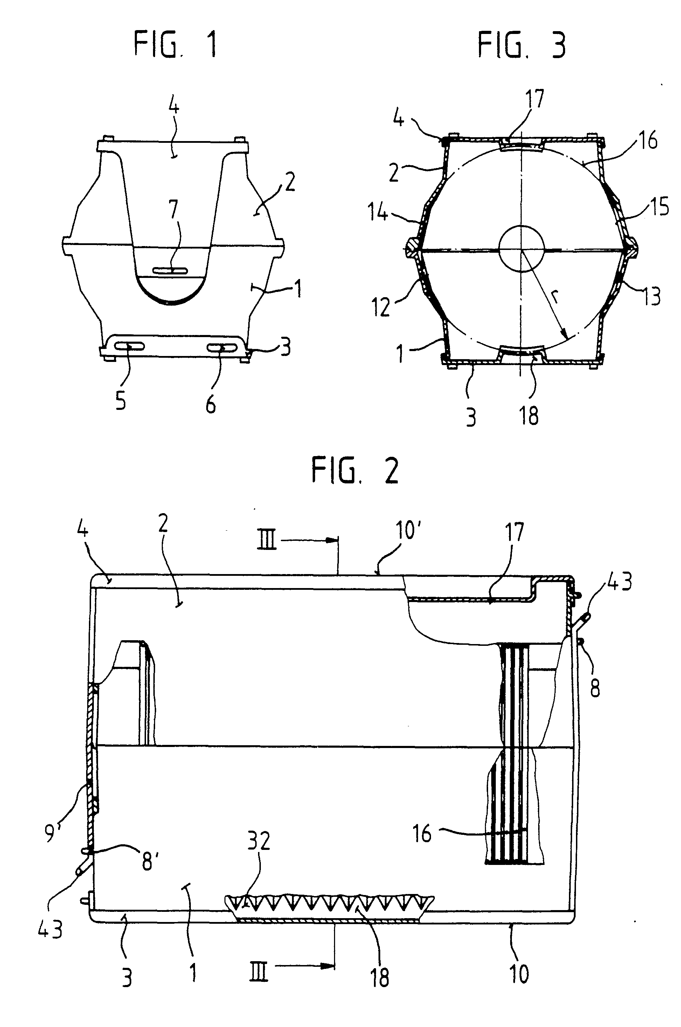

In Fig. 1 ist ein Behälter für kreisrunde Scheiben (z.B. Aufzeichnungsträgerplatten) dargestellt, der aus zwei Grundkörperteilen 1 und 2 und zwei Deckelteilen 3 und 4 besteht. In zusammengebautem Zustand ergeben diese vier Teile einen rundum geschlossenen Behälter. Die Teile 1 und 3 können dabei als Grundkörper oder Kasten angesehen werden, der durch den aus den Teilen 2 und 4 bestehenden "Deckel" verschließbar ist. "Kasten" und "Deckel" sind jedoch beliebig neu festlegbar, da dieselben hier identisch sind.

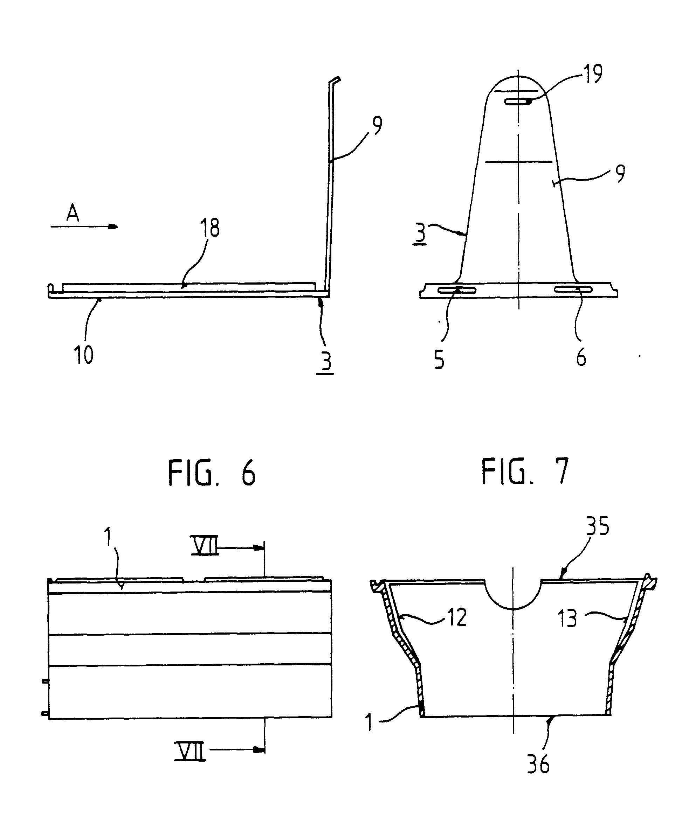

Grundkörper oder Tragteil 1 und Deckel oder Verschlußteil 3 sind beispielsweise durch als Steck oder Federelemente 5 und 6 ausgebildete Verriegelungseinrichtungen miteinander verbindbar, wobei hier Vorsprünge am Tragteil 1 in Aussparungen des Verschlußteils 3 hineinragen. In gleicher Weise können Tragteil 2 und Verschlußteil 4 miteinander verbunden sein. Verschlußteil 4 und Tragteil 1 können durch federnd einrastende Elemente 7 miteinander verbunden sein. Es können auch entweder Elemente 5 und 6 oder Element 7 federelastisch sein. Im Beispiel der Figuren 1 bis 7 handelt es sich um einen am Tragteil 1 angebrachten Vorsprung 8', der in eine Aussparung 19 des Verschlußteils 4 hineinragt. Die Verschlußteile 3 und 4 haben einen etwa L-förmigen Querschnitt (Fig. 4). Sie sind zweckmäßig aus elastisch verformbarem, insbesondere thermoplastischem, Kunststoff hergestellt, so daß der Arm der L-Form oder die Wand 9 bzw. 9' insgesamt so weit gebogen werden kann, bis sie über den Vorsprung 8 bzw. 8' ragt. Infolge der Federelastizität der Wände 9 und 9' schnappen diese über die Vorsprünge 8 und 8' und die Teile 1, 2 sind miteinander verriegelt. Wenn beide Verschlußteile 3 und 4 in ihrer Verriegelungsposition sind, sind die vier Einzelteile 1 bis 4 miteinander verriegelt und der Behälter ist vollständig verschlossen. Die Verschlußteile 3 und 4 können auch aus einem zähelastischen Kunststoff, wie beispielsweise polypropylen, polyethylen oder Polyester bestehen. Zur leichteren Biegbarkeit der Wand 9 bzw. 9' kann diese auch schmaler ausgeführt sein als die Ward 10 bzw. 10' der Verschlußteile 3 und 4, wobei letztere in diesem Beispiel als Stellfläche für den Behälter dient. Die Deckel oder Verschlußteile 3 und 4 sind auch aus nicht oder nur teilweise elastischem Kunststoff herstellbar. Es ist dabei grundsätzlich auch möglich, die Deckelteile 3 und 4 bereichsweise mehr oder weniger elastisch auszubilden z.B. durch Vorsehen von Filmscharnieren etc. Dabei müssen diese Maßnahmen ein funktionsmäßig ausreichend sicheres Verriegeln und Verschließen der Behälterteile ermöglichen.

Die Grundkörper- oder Tragteile 1 und 2 können ebenfalls aus Kunststoff, beispielsweise aus polyamid bestehen, sie können jedoch auch aus Metall, Metallegierungen, z.B. Aluminium- oder Magnesium oder auch aus keramischen Werkstoffen bestehen. Dabei sollten sie, ebenso wie die Deckeloder Verschlußteile, in Serienproduktionsverfahren, wie z.B. Spritzguß-, preß- oder Sinterverfahren, hergestellt werden.

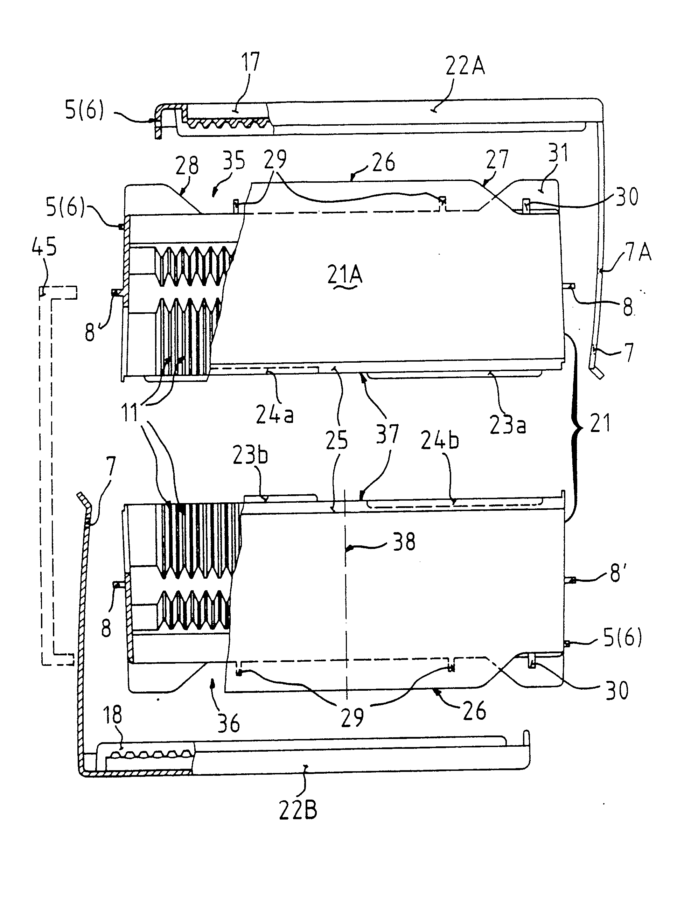

Die Tragteile 1 und 2 haben entsprechend den Fig. 1 bis 3 etwa die halbe Höhe des Behälters, so daß zwei richtig zusammengefügte Tragteile 1 und 2 im wesentlichen die Höhe des Behälters bestimmen. Aus Fig. 7 ist zu erkennen, daß die Tragteile 1 und 2 im wesentlichen rahmenförmig ausgebildet sind, mit großen Öffnungen 35, 36 an zwei einander gegenüberliegenden Seiten. Dadurch sind die Tragteile 1 und 2 besonders einfach zu reinigen. Außerdem können die Scheiben 16, wenn die Höhe der Tragteile 1 und 2 etwa dem Scheibenradius r entspricht, leicht in dieselben eingesetzt und wieder aus denselben entnommen werden, z.B. per Hand am Außenrand der Scheibe 16 oder maschinell am Innenrand der Öffnung 37 der Scheibe 16. So kann die Bestükkung und Entnahme auch sehr einfach automatisch erfolgen. In den Tragteilen 1 und 2 ist eine Vielzahl von Aufnahmerillen (vgl. Fig. 2) angebracht. Die Rillen, die Kreisbogenform haben können, verlaufen hier nicht durchgehend, sondern für das Tragteil 1 nach Fig. 7 beispielsweise in zwei Ansätzen 12 und 13 des Tragteils. Die Rillen müssen dabei an ihren Bodenflächen nicht gekrümmt sein, sondern sie können dort geradlinig eben verlaufen, so daß die Scheiben 16 nicht linienförmig, sondern punktförmig am Boden der Rillen anliegen. Das Tragteil 2 hat entsprechende Ansätze 14 und 15. Wichtig ist, daß die Rillen tief genug sind, um die in Fig. 3 strichpunktiert eingezeichneten Platten 16 so zu halten, daß sie nicht in Querrichtung ausweichen können. Zweckmäßig können die Rillen einen etwa trapezförmigen Querschnitt aufweisen, vgl. z.B. Fig. 9.

Die Scheiben 16 sind damit durch die Rillen in ihrer Position im Behälter festgelegt und, wenn die Rillen nicht zu eng ausgeführt sind, werden die Scheiben 16 auch nicht beschädigt. Eine solche Beschädigung der Beschichtung der Scheiben 16 ist vermeidbar, wenn eine relativ lose Aufnahme in die Rillen stattfinden kann.

Im übrigen ist die Standfestigkeit der Scheiben in seitlicher Richtung eine Frage der Höhe oder Tiefe der Rillen, die jedenfalls so gewählt werden kann, daß auch ohne weitere zusätzliche Haltemittel für die Einzelscheibe oder die Mehrzahl der Scheiben eine ausreichende Standfestigkeit erreichbar ist. Letzteres gilt besonders für Scheiben, die im Augenblick des Einbringens in den Behälter nicht mehr oder noch nicht beschädigbar sind, wie z.B. Substratplatten für Magnetaufzeichnungsträger, optische Platten, Schaltungsplatten, Wafers, Schallplatten usw.

Für Scheiben 16 mit empfindlicher Schicht ist es notwendig, diese in jeder Richtung festzulegen. Zu diesem Zweck können an den Verschlußteilen 3 und 4 Einbuchtungen oder Vorsprünge 17 bzw. 18 vorgesehen sein, die in Verschlußposition in den Behälter hineinragen und mit der Oberkante des Scheibenumfangs in Kontakt treten können. Diese Einbuchtungen 17 und 18 dienen als beiderseitige Halteeinrichtungen für die Scheiben 16. Jede Einbuchtung 17, 18 kann auch federelastisch sein, wodurch sie sich unter Druck an den Umfangsrand der Scheiben 16 anlegt. Die Scheiben 16 sind dann zwischen beiden Einbuchtungen 17 und 18 eingespannt und sie werden an den Boden der Rillen gepreßt.

In jedem Verschlußteil 3 oder 4 kann mindestens eine solche Einbuchtung 17 oder 18 vorhanden sein, die zweckmäßig etwa mittig angeordnet ist. Die Einbuchtungen können aber auch außermittig angebracht sein. Sie sollten sich aber immer, bezogen auf die Scheiben 16, diametral gegenüberliegen. Es können auch zwei oder mehr Einbuchtungen oder Vorsprünge an jedem Verschlußteil angebracht sein.

Die Vorsprünge sind auch als Materialverdickungen realisierbar. Sie können aber starr sein, z.B. wenn nur eine geringe Elastizität durch die Wand 10 selbst aufgebracht wird.

Jede Einbuchtung 17 oder 18 kann durchgehend ausgebildet sein und ist im Querschnitt an die Umfangskontur der Scheiben 16 anpaßbar. Es ist, wie in Fig. 2 deutlich, auch möglich und vorteilhaft, die Einbuchtungen 17, 18 aus einer Vielzahl von Querrippen 32 auszubilden, deren Abstand und Form denen der Rillen angepaßt sein kann.

Prinzipiell werden die Scheiben 16 über jede der Einbuchtungen 17 oder 18 an die Bodenfläche der Rillen 16 gedrückt, so daß die Scheiben 16 auch zeitlich festgelegt sind. Für diese Funktion könnte es zwar prinzipiell ausreichen, wenn beispielsweise nur der Vorsprung 17 vorhanden wäre, während der Verschlußteil 3 keinen Vorsprung aufweist. Dann müßten aber pro Behälter zwei unterschiedlich geformte Verschlußteile hergestellt und eingesetzt werden, wodurch derselbe wieder aufwendiger würde. Außerdem ist die Sicherheit gegen seitliches Ausweichen der Platten 16 bei zwei einander gegenüberliegenden Vorsprüngen 17 und 18 größer.

Es ist jedoch möglich, die Verschlußteile 3 und 4 formgleich, aber aus unterschiedlichen Werkstoffen herzustellen, wodurch z.B. nur eine der Einbuchtungen federelastisch sein könnte.

Die Querrippen 32 sind als Ausbauchungen der Wände 10 bzw. 10 ausgebildet. Sie haben einen etwa V-förmigen Querschnitt. Beim festen Anlieger an der Umfangsfläche der Scheiben 16 können die Querrippen 32 elastisch eingedrückt werden, so daß sich ihre Querschnittsform verändert. Die Wandstärke der Rippen 32 kann gegenüber der sonstigen Wandstärke der Verschlußteile 3 und 4 verringert sein.

Der Zusammenbau des Behälters geschieht beispielsweise wie folgt:

Es werden zunächst die Tragteile 1 und 2 in die Verschlußteile 3 und 4 eingesetzt. Dabei greifen die Verriegelungselemente 5 und 6 ineinander. Damit sind "Deckel" und "Kasten" fertiggestellt. Sie werden dadurch zum Behälter zusammengefügt. daß die aus den Teilen 2 und 4 bestehende "obere Hälfte" um 180° geschwenkt und auf den aus den Teilen 1 und 3 bestehenden "Kasten" aufgesetzt wird. Die Wände 9 und 9' werden dabei nach außen gebogen, so daß sie über die Vorsprünge 8 und 8' greifen können. Wenn die Tragteile 1 und 2 fest aufeinander liegen, werden die Wände 9 und 9' losgelassen, so daß die Vorsprunge 8 und 8' in deren Ausnehmungen 19 (Fig. 5) eingreifen oder einschnappen. Der Behälter ist damit verschlossen. Die Scheiben 16 werden gegebenenfalls vor dem Verschließen des Behälters z.B. in den Tragteil 1 eingesetzt.

Das beschriebene Behälterbeispiel zeichnet sich durch folgende Merkmale dadurch aus

daß Kasten und Deckel als im wesentlichen identische, sich zu einem geschlossenen Behälter ergänzende Teile ausgebildet sind,

daß Kasten und Deckel jeweils aus einem inneren, Rillen aufweisenden Tragteil 1, 2 und einem äußeren, im Querschnitt etwa L-förmigen Verschlußteil 3, 4 bestehen,

daß die Tragteile 1, 2 in die Verschlußteile 3, 4 einsetzbar und durch mindestens an einer Stelle angebrachte Steckelemente 5, 6 mit denselben verbindbar sind,

daß die gegebenenfalls elastisch verformbaren Einbuchtungen 17, 18, insbesondere an den beiden Verschlußteilen 3, 4 angebracht sind und

daß bei geschlossenem Behälter die beiden Tragteile 1, 2 fest aneinander liegen, während der Verschlußteil 4 des Deckels am Tragteil 1 des Kastens und umgekehrt durch Verriegelungselemente 8, 8' festlegbar ist,

daß gegebenenfalls die Einbuchtungen 17, 18 Nuten oder Rippen 32 aufweisen, deren Abstand voneinander dem Mittenabstand der Rillen entspricht, und die den Rillen des Tragteils im wesentlichen gegenüberliegen.

Einer der Vorteile dieses Behälters liegt in der Ausbildung der gegebenenfalls elastischen Einbuchtungen, die z.B. als durchgehende Ausbauchung einer Wand der Verschlußteile ausgebildet sind. Diese Einbuchtungen oder Vorsprünge sind also Teil der Wand der Verschlußteile, so daß sie relativ unempfindlich und kaum zu beschädigen sind. Eine evtl. erforderliche elastische Verformbarkeit können sie auch durch ihre Gestalt erhalten. Sie können bei geschlossenem, gefülltem Behälter bei ihrer Anlage an die Scheiben angedrückt werden. Die Scheiben können dadurch ständig in die Rillen gedrückt und damit sicher und unverrückbar in ihrer Position gehalten werden.

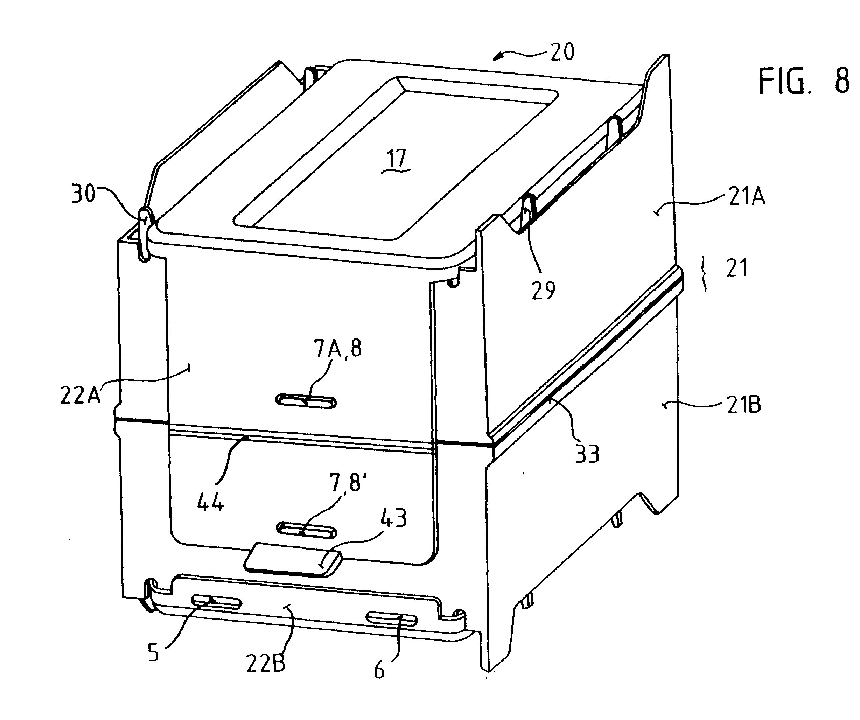

In den Figuren 8 bis 14 ist eine weitere Ausführung der Erfindung, ein Behälter 20 dargestellt mit Grundkörperteilen 21 A und B, im folgenden wieder als "Tragteile" bezeichnet, und Deckelteilen 22 A und B, im folgenden wieder als "Verschlußteile" bezeichnet. Die Tragteile 21 A und B sind gleich ausgebildet, was, wie auch für den Behälter der Figuren 1 bis 7 gilt, soviel heißt, daß beide Teile aus denselben Formen herstellbar sein sollen. Die Tragteile 21 A und B sind jeweils in einer Lage (in gleicher Richtung nebeneinander mit gleicher Ausbildung in Vertikalrichtung) gleich oder im Grenzfall sogar identisch ausgebildet. Aus beschriebener Lage ist beispielsweise Teile 21 A um 180° drehbar gegenüber Teil 21 B und durch Drehung um weitere 180° in Vertikalebene auf den Teil 21 B aufsetzbar, wodurch sich der zweiteilige Grundkörper 21 ergibt, der oben und unten die Öffnungen 35 bzw. 36 aufweist (Fig. 9). Den Tragteilen 21 A und B bzw. dem Grundkörper 21 sind die Verschlußteile 22 A und B zugeordnet, die jeweils, wenn erforderlich auch zweiteilig ausgebildet sein könnten, die aber gemeinsam auch einteilig ausbildbar sind, etwa einer ersten gemeinsamen Wand zum Verschluß beider Öffnungen 35 und 36 und nur einer einseitigen Verbindungswandung. Die Ausbildung der Verschlußteile 22 A und B entspricht im wesentlichen der der Teile 3 und 4 aus Figur 1 bis 7, etwa mit dem Unterschied einer Trapez-Querschnittsform statt der Dreiecksform der Rippen 32 in Figur 2. Im wesentlichen gleiche Teile werden im folgenden auch gleich bezeichnet.

Bei geschlossenem Behälter 20 ergibt sich eine im wesentlichen zumindest seitlich abgedeckte Trennfuge 33, die durch ein verschachtelt räumliches Ineinandergreifen der z.B. umlaufenden Dichtstege 23 a und b und Dichtnuten 24a und b gebildet wird. Die Dichtstege und -nuten 23 und 24 sind ein Teil der Stapeleinrichtungen dieses Behälters, und sie sind am Rand 25 jedes Tragteils 21 A und B vorgesehen. Der Rand 34 ist der Umfangsrand jedes Teils 21 A oder 21 B und begrenzt die jeweilige teileigene Öffnung 37. Bei mit den Dichtstegen und -nuten 23 bzw. 24 ineinander gefügten Tragteilen 21 A und 21 B kommen die Öffnungen 37 also aufeinander zu liegen.

Die Dichtstege und -nuten 23 und 24 sind an jedem Tragteil so angeordnet, daß, bezogen auf die vertikale Querachse 3B und oben liegender teileigener Öffnung 37, die Dichtstege 23 an einer Seite, in Figur 9 beim Tragteil 21 B z.B. links, und die Dichtnuten 24 rechts davon angeordnet sind. Gegenüber dieser Lage des Tragteils 21 B ist also das Tragteil 21 A erstens in der Horizontalebene zu drehen (senkrecht zur Zeichenebene) und dann in einer Vertikalebene (in der Zeichenebene) damit eine Anordnung zum Zusammenfügen der Tragteile 21 A und B erreicht wird. Es ist jedoch ebenso möglich, rechts und links jeweils einen Steg 23 und einem Nut 24 parallel zueinander vorzusehen, so daß sich die Stege 23 und die Nuten 24 diagonal gegenüberliegen. Die Drehungen (jeweils um einen 180°-Drehwinkel) erfolgen dann ebenso wie vorstehend beschrieben.

Der Tragteil 21 B hat an seiner Unterseite die Öffnung 36, die vom äußeren Rand 26 umschlossen ist. Der äußere Rand oder Öffnungsrand 26 ist ebenfalls mit Stapeleinrichtungen ausgebildet, die aus Konturstegen 27 und entsprechenden Ausschnitten 28 bestehen. Tragteil 21 A weist entsprechende Konturstege 27 und Ausschnitte 28 an seiner Oberseite, insbesondere am äußeren Öffnungsrand 26 auf. Der Teil 21 B ist nach Drehung um 180° in einer Horinzontalebene auf den Tragteil 21 A aufsetzbar. Ebenfalls ist die aus den zusammmgefügten Tragteilen 21 A und 21 B bestehende Grundkörpereinheit 21 in einer Mehrzahl in der Vertikalen stapelbar.

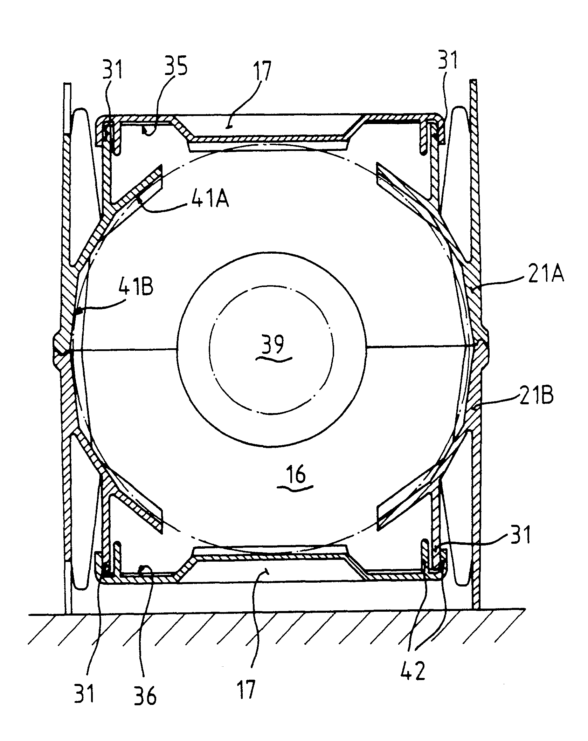

In Figur 10 ist sichtbar, daß hier im Querschnitt ein Innenrand 31 vorgesehen ist, der die Öffnungen 35 bzw. 36 direkt umrandet. Über diesen Innenrand 31 wird der Deckelteil 22 A bzw. 22 B gestülpt, wobei ein sicherer Verschluß erreicht wird, wenn, wie dargestellt die Höhe des Deckelteils 22 A und 22 B in Verschlußposition niedriger ist als die Hohe des Kontursteges 27 und evtl. weiterer Stützelemente, so ist jeder mit einem Deckelteil 22 A und B versehener Tragteil 21 A oder 21 B einzeln ebenso stapelbar wie die gesamte Grundkörpereinheit komplett mit zwei Deckeln, s. Figur 15. Hier ist auch deutlich, daß die eine zur Verriegelung des Deckelteils 22 dienende Deckelwand schmaler ausbildbar ist als der Abstand a der langen Seiten des äußeren Öffnungsrands 26 jedes Tragteils 21 A oder 21 B. Es ist dabei wichtig, daß die durch zwei gestapelte Tragteile 21 A und 21 B gebildete Axial-Kreisöffnung 39 in Verschlußposition des Deckelteils geschlossen ist.

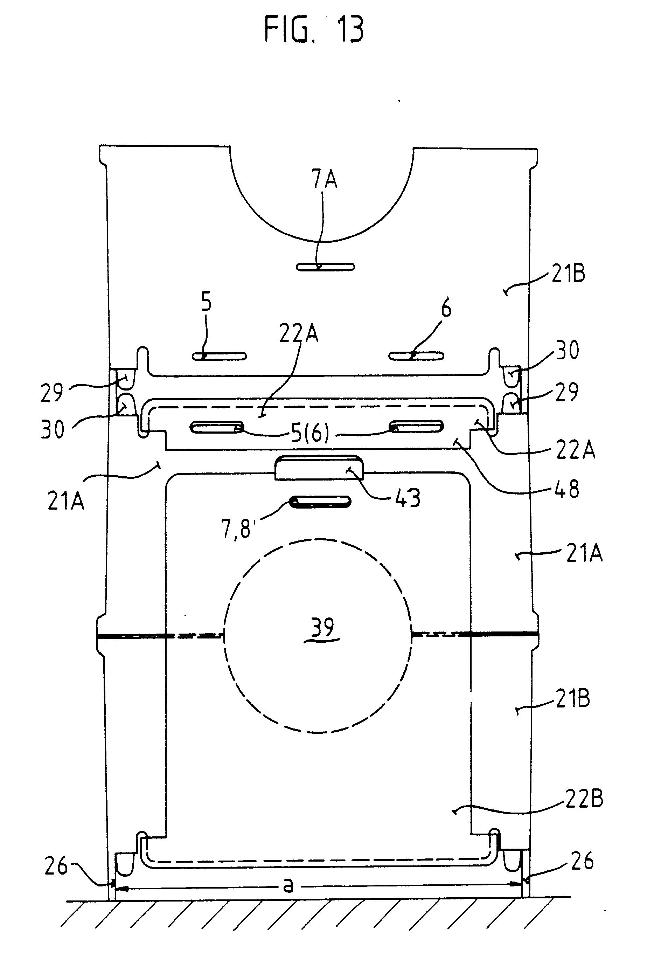

Es ist zweckmäßig, insbesondere im Hinblick auf seitliche Relativbewegungen gestapelter Trag- oder Behälterteile, Stützelemente vorzusehen, die beispielsweise in Wanddickenabstand, jeweils im Bereich der Ausschnitte 28 vorgesehen sind und die in der Höhe über die Ausschnittskontur 28 hervorragen. Solche Stützelemente sind die Rippen 29, 30, die senkrecht zur Wandung mit dem Rand 26 angeordnet sind. Wie in Figur 13 sichtbar, haben die Rippen 29 und 30 der Tragteile 21 B und 21 A eine Höhe, die etwa der Hälfte der Höhe der Endteile der Ausschnittskontur 28 entspricht.

Es ist jedoch, wenn beim Hinstellen des einzelnen Tragteils zusätzliche Stützen notwendig sind, auch möglich, die Höhe der Rippen 29, 30 und der Endteile der Ausschnittskontur 2B und des Kontursteges 27 anzupassen, insbesondere, wenn die Anordnung (vgl. Fig. 8) so erfolgt, daß die Rippen 29 in Stapellage zwischen die Rippen 30 oder umgekehrt greifen oder anderweitig zueinander versetzt vorgesehen sind.

In Figur 9 ist ein Teil der Tragteilwandungen ausgebrochen dargestellt, um die Aufnahmerillen zu zeigen, die hier als Teilrillen ausgeführt sind, wobei jede Rille vorteilhaft trapezförmigen Querschnitt besitzt. Etwaige Rillen 40 können vorteilhafterweise ebenfalls mit Trapezquerschnitt ausgebildet sien. Die Böden der Rillen können Kreisform aber auch eine gerade Form, z.B. als Kreistangenten 41 A, 41 B in Fig. 10 aufweisen. In dieser Darstellung ist der Boden jeder Rille als ebene Fläche bzw. als voneinander beabstandete Flächenstücke ausgebildet.

In Fig. 10 ist erkennbar, daß der Umfangsrand 42 der Deckelteile 22 A und B zur besseren Abdichtung als Doppelrand ausgebildet ist, der den Rand der Innenwand zwischen sich aufnimmt und beiseitig abschließt. Die Verriegelung jedes Deckelteils mit einem oder zwei Tragteilen 21 A bzw. 21 B erfolgt über Aussparungen bzw. Vorsprünge (5, 6, 7, 8, 8', 19), die sich sowohl an den Endteilen der Deckelteile 22 als auch an dem Stirnflächen der Tragteile 21 A und B befinden können.

Eine weitere Aussparungs-/Vorsprungs-Kombination 7a kann auch ggf. zusätzlich am gleichen Tragteil 21 A oder 21 B, z.B. in der Nähe der Teilöffnung 39 vorgesehen sein, was eine Tragteil-Deckelteil-Einheit noch begünstigt, vgl. Fig. 8. Eine Grifflasche 43 erleichtert sowohl das Verriegeln als auch das Entriegeln der Verriegelungselemente. Zur Erhöhung der Flexibilität der schmalen Wand des Deckelteils 21 A, 21 B ist es ggf. auch zweckmäßig, etwa in Höhe des Randes 34 des Tragteils 21 A oder 21 B ein Filmscharnier 44 vorzusehen. Auch dann sind an die Flexibilität des Materials nicht zu große Anforderungen zu stellen.

Pinzipiell ist es auch möglich, die Deckelteile 22 durch zwei U-förmige, evtl. flexible Klammern 45, wie einseitig in Fig. 9 angedeutet, zu ersetzen, wenn z.B. die Tragteile 21 A und B unabgedeckt z.B. maschinell gehandhabt werden sollen.

Im folgenden wird wegen der Vielzahl der Figuren nochmals eine kurze Beschreibung der Einzelfiguren gegeben.

Es zeigen

Figuren 1 und 3 einen etwas rundlichen Behälter in Ansicht von der Stirnseite bzw. im Querschnitt

Figur 2 denselben Behälter in Seitenansicht, teilweise aufgebrochen mit einer darin enthaltenen Anzahl von Scheiben

Figuren 4 und 5 einen Verschluß oder Deckelteil in Seiten bzw. Vorderansicht und

Figuren 6 und 7 einen Tragteil in Seitenansicht und im Querschnitt

Figuren 8 bis 14 einen mehr quaderförmigen Behälter, im einzelnen:

Fig. 8: Zwei, etwa vollkommen gleiche Behälterhälften passen nach 180° Drehungen steckbar ineinander und bilden einen Behälter zusammen mit zwei ebenfalls etwa vollkommen gleichen Deckeln zum Verschließen von Öffnungen an den Außen und Stirnseiten des Grundkörpers und zum Verriegeln aller. Teile miteinander. Der Behälter dient zur Verpackung und/oder zum Transport für eine Anzahl scheibenförmiger Gegenstände.

Fig. 9: Eine Einzelheiten-Darstellung des Behälters. Die Ränder 34 der beiden Tragteile sind gegenüberliegend mit Stegen (23) und Nuten (24) versehen, die eine genaue und nicht verschiebbare Lage von Ober und Untertragteil zueinander gewährleisten.

In Fig. 10 ist erkennbar, daß die Tragteile an den Längsseiten doppelwandig ausgebildet sind. Hierbei dienen die beiden Außenränder bei Verwendung als Unterteil als Abstützungen, als Oberteil zur Aufnahme eines aufgesetzten weiteren Behälters.

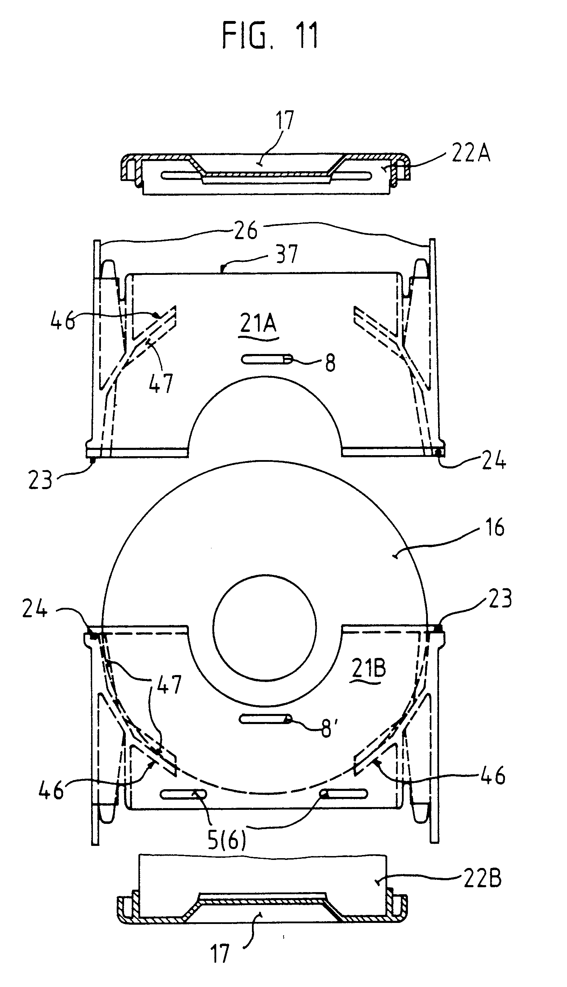

Fig. 11: In der auseinandergezogenen Einzelteil-Darstellung einer Vorderansicht sind die für eine maschinelle Scheibenentnahme notwendigen Öffnungen stirnseitig sowie oben und unten, gut zu erkennen. Die Deckel passen in den umlaufenden Rand der rechteckigen Öffnungen, deren Seiten durch die Stirnwände und die senkrechten Innenwände gebildet werden. Bei entferntem oberen Tragteil sind die im Unterteil zur Hälfte heraustehenden Scheiben von Hand durch Greifen am Außenrand problemlos und beliebig einzeln entnehmbar.

Der untere Deckel muß nur bei maschineller Entnahme entfernt werden.

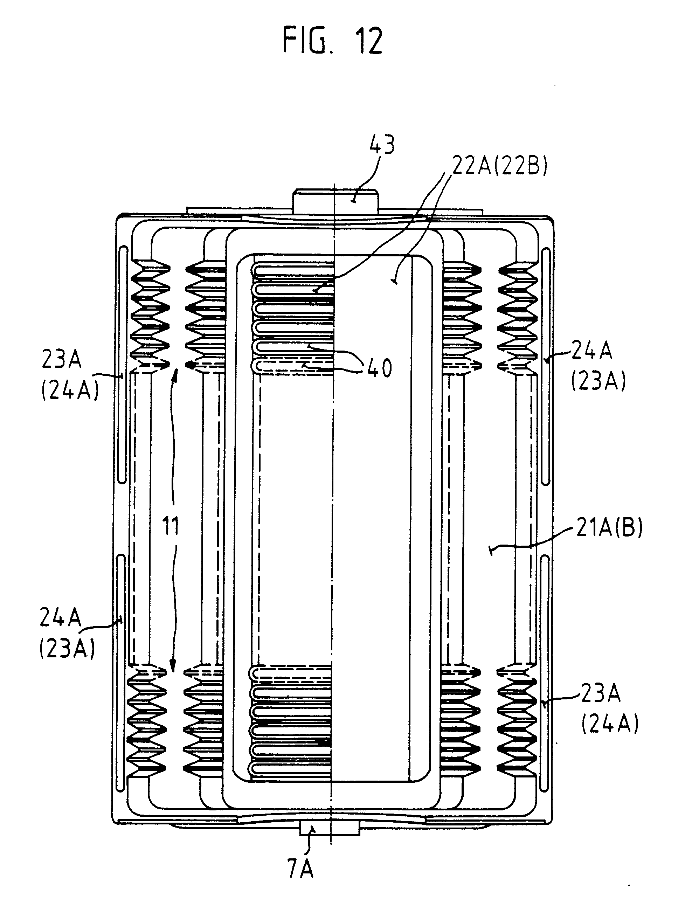

Fig. 12 zeigt eine Draufsicht auf ein Behälterunterteil (unteres Tragteil) mit Deckel. Der Deckel ist in zwei Ausfühnrungsformen (durch die Längenmittelachse getrennt) dargestellt.

Er kann glattflächig (rechts) oder auch mit zusätzlichen Rillen (links) ausgeführt werden. Im ersten Beispiel können dann zusätzliche Randanlageelemente am Umfang der Scheiben notwendig sein.

Fig. 13 zeigt die Vorderansicht eines kompletten Behälters mit Deckeln, auf den ein Tragteil (Unterteil) eines weiteren Behälters (ohne Deckel) aufgesetzt ist. Die Stapelung von Behälterteilen ist mit und ohne Deckelteilen möglich.

Es bleiben zwischen zwei aufeinandergesetzten Behältern genügend große Zwischenräume für die Deckelteile. Die Abstützung und Lagearretierung erfolgt nur auf den äußeren Seitenwänden. Die Deckel sind mit Abstand von den Seitenwänden nach innen angeordnet.

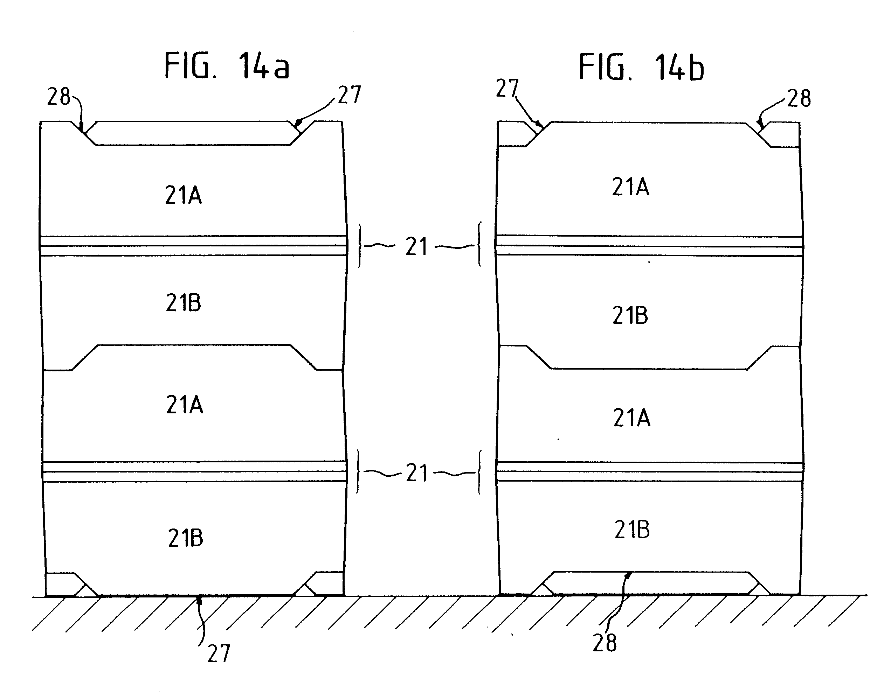

In Fig. 14a und b sind in beiden Seitenansichten (rechts bzw. links, bezogen auf die Ansicht in Fig. 13) mehrere, aufeinandergesetzte Behälter dargestellt.

Im Querschnitt ist die Innenform der beiden Tragteile dem jeweiligen Scheibenumfang angepaßt. Das heißt jedes Tragteil bildet eine dem Umriß (im Beispiel: Durchmesser) der Scheiben entsprechend ausgebildete Halbschale, kreisförmig, vorwiegend oder, wie abgebildet, polygonartig, die nach unten bzw. oben unterbrochen ist. In den tragenden Teilen 46 des Umfangs dienen kammähnliche Erhöhungen 47 zur Abstandshaltung der Scheiben.

Beide Tragteile zusammen umschließen die Scheiben beiderseits in einem großen Winkelbereich, und letztere sind so in ihrer Lage spielfrei nach allen Seiten gesichert.

Die im Querschnitt senkrecht nach unten verlaufenden Innenwände unterhalb und oberhalb der Scheiben bilden zusammen mit den beiden senkrechten Kopfwänden offene Rechtecke (Öffnungen 37), welche mit den passenden Deckeln verschlossen werden können, wobei die Stapelbarkeit der Behälterteile mit und ohne Deckel möglich ist. Der umlaufende Deckelrand ist an beiden Kopfseiten mit Befestigungslaschen 48, die in bezug auf die Längsseiten höher sind, ausgebildet.

Ein oder mehrere Schlitze (5, 6, 7, 7A, 19) in den beiden Befestigungslaschen 48 und den übrigen Verschlußteilen greifen zum Verschließen und Arretieren in entsprechende am oberen bzw. unteren Tragteil vorgesehene Vorsprünge (5, 6, 8, 8', 7A) ein. Deckel und Tragteile sind dadurch fest miteinander verbunden und bilden so einen geschlossenen Behälter.

Zum Öffnen des Behälters und zur Deckelentfernung werden die flexiblen langen Kopfseiten der Deckelteile von den Haltevorsprüngen entfernt durch Abziehen.

Schutz wird auch für alternative Ausführungen zu beschriebene Detaillösungen im Rahmen der Ansprüche begehrt.

So können z.B. statt der Stege und Nuten zur lagegenauen Verbindung zwischen Ober und Unterteil eines Behälters auch Stifte und Bohrungen vorgesehen sein. Weiter können die zur Arretierung der Deckel mit den Tragteilen statt der Stege und Schlitze Klips- oder Schnappverbindungen oder Bolzen und Bohrungen angebracht sein.

## Patentansprüche

1. Behälter für eine Mehrzahl von scheibenförmigen Gegenständen, insbesondere Aufzeichnungsträgern (16), bestehend aus einem, mit wenigstens zwei Öffnungen versehenen Grundkörper mit einer Mehrzahl von Aufnahmerillen für die Gegenstände und aus wenigstens einem Deckelteil sowie aus zwischen Grundkörper und Deckelteil(en) vorgesehenen lösbaren Verriegelungseinrichtungen (5—8) dadurch gekennzeichnet, daß der Grundkörper aus zwei zusammensetzbaren, jeweils im wesentlichen gleichen Teilen (1 und 2, 21 A und 21 B) besteht und zwei weitere, jeweils im wesentlichen gleiche Deckelteile (3 und 4, 22 A und 22 B) vorgesehen sind, wobei jeder Deckelteil (3, 4, 22 A, 22 B) mindestens eine der Öffnungen (35, 36) des Grundkörpers (21) mindestens teilweise abdeckt und die Verriegelungseinrichtungen (5—8) zumindest an einem Deckelteil (3, 4, 22 A, 22 B) vorgesehen sind, mittels der die beiden Teile (1 und 2, 21 A und 21 B) des Grundkörpers (21) lösbar miteinander verriegelbar sind.

2. Behälter nach Anspruch 1, dadurch gekennzeichnet, daß die Deckelteile (3 und 4, 22A und 22B) im Seitenriß L-Form aufweisen und jeder Arm der L-Form eine Seite des Grundkörpers im Seitenriß umfaßt.

3. Behälter nach Anspruch 2, dadurch gekennzeichnet, daß jeder Arm der L-Form mit Verriegelungselementen (5, 6, 7, 7A, 19), insbesondere mit Aussparungen, ausgebildet ist, und daß die umgriffenen Seitenflächen mit entsprechenden Verriegelungselementen (5, 6, 7A, 8, 8'), insbesondere mit Vorsprüngen, ausgebildet sind.

4. Behälter nach Anspruch 1 und einem oder beiden Ansprüche 2 bis 3, da durch gekennzeichnet, daß jeweils der eine Öffnung (35, 36) des Grundkörpers (21) verschließende Arm der L-Form Deckelteile (22A, 22B) mit den Aufnahmerillen des Grundkörpers zugeordneten Halteeinrichtungen (32, 40) ausgebildet ist.

5. Behälter nach Anspruch 4, dadurch gekennzeichnet, daß die Halteeinrichtungen als Einbuchtungen oder Ausbuchtungen gestaltet sind.

6. Behälter nach Anspruch 1, dadurch gekennzeichnet, daß die Teile des Grundkörpers zumindest in der Nähe der die wenigstens zwei Öffnungen (35, 36) mit Stapeleinrichtungen ausgebildet sind.

7. Behälter nach Anspruch 6, dadurch gekennzeichnet, daß die Stapeleinrichtungen miteinander flächig und/oder räumlich verschachtelbare Wandteile (23, 24, 27, 28, 29, 30) der Grundkörperteile (21A, 21B) sind.

8. Behälter nach Anspruch 6 oder 7, dadurch gekennzeichnet, daß die Stapeleinrichtungen an den Grundkörperteilen (21A, 21B) derartig angeordnet sind, daß eine Symmetrie zur vertikalen Mittelachse (38) des Seitenrisses oder zur räumlichen Mittelachse zweier aufeinander gestapelter Grundkörperteile (21A und 21B) besteht.

9. Behälter nach Anspruch 7 oder 8 oder 7 und 8, dadurch gekennzeichnet, daß die Stapeleinrichtungen deckungsgleich angeordnete Vorsprünge und Vertiefungen sind, die derartig angeordnet sind, daß einer der beiden Grundkörperteile (21A und 21B) um 180° in der Horizontalebene gegenüber dem anderen Grundkörperteil (21B oder 21A) gedreht und nach 180° Drehung in der Vertikalebene auf den anderen Grundkörperteil (21B oder 21A) aufsetzbar ist und ein Ineingriffkommen der einzelnen Stapelelemente (23, 24 bzw. 27, 28) bewirkt.

10. Behälter nach Anspruch 9, dadurch gekennzeichnet, daß die Stapeleinrichtungen wenigstens teilweise aus Dichtstegen (23a und b) und -nuten (24a und b) bestehen, die an zumindest einem Öffnungsrand (25) eines Grundkörperteils (21) und parallel zum Rand (25) vorgesehen sind.

11. Behälter nach Anspruch 9 oder 10, dadurch gekennzeichnet, daß Stapeleinrichtungen wenigstens teilweise aus am äußeren Öffnungsrand (26) vorgesehenen Konturstegen (27) und entsprechenden Ausschnitten (28) bestehen.

12. Behälter nach Anspruch 11, dadurch gekennzeichnet, daß im Wanddickenabstand angeordnete Stützelemente (29, 30) jeweils im Bereich der Ausschnitte (28) vorgesehen sind und in der Höhe über die Ausschnittskontur hervorragen.

13. Behälter nach Anspruch 11, dadurch gekennzeichnet, daß parallel zum äußeren Öffnungsrand (26) ein innerer Öffnungsrand (31) vorgesehen ist, der vom Deckelteil (22A, 22B), insbesondere haubenartig, verschließbar ist.

14. Behälter nach Anspruch 12, dadurch gekennzeichnet, daß die Höhe des Deckelteils (22A, 22B) in Verschlußposition niedriger ist, als die Höhe des Kontursteges (27) bzw. der Stützelemente (29, 30).

15. Behälter nach Anspruch 13, dadurch gekennzeichnet, daß die Deckelteile zumindest im Bereich der die Öffnung (35, 36) des Grundkörperteils (21A bzw. 21B) abdeckenden Wand (9) schmaler ist als der Abstand (a) der langen Seiten des äußeren Öffnungsrandes (26) voneinander.

16. Behälter nach Ansprüchen 4 oder 5, dadurch gekennzeichnet, daß die Halteeinrichtungen als mindestens ein federlastisches Element (17), insbesondere mit U- oder Wannenquerschnittsform an einer Wand der L-Form Deckelteile (3, 4, 22A, 22B) ausgebildet sind.

17. Behalter nach Anspruch 16, dadurch gekennzeichnet, daß das federelastische Element eine Einbuchtung (17, 18) eines Deckelteils (3, 4, 22A, 22B) ist.

18. Behälter nach Anspruch 1 oder 5, dadurch gekennzeichnet, daß die Aufnahmerillen der Grundkörperteile und/oder die Gegenstücke (40) an der Halteeinrichtung etwa trapezförmigen Querschnitt aufweisen.

19. Behälter nach Anspruch 1, dadurch gekennzeichnet, daß die Boden der Aufnahmerillen an den Grundkörperteilen (21A, 21B) in der Umrißform annähernd eine Kreis oder Kreistangentenform und insbesondere eine unterbrochene Kreisbogen oder Kreistangentenabschnittsform aufweisen.

20. Behälterteil für einen Behälter nach Anspruch 1 und einem oder mehreren der Ansprüche 2 bis 19, gekennzeichnet durch einen etwa rechteckigen, aus Wänden bestehenden Rahmen, durch Aufnahmerillen für die scheibenförmigen Gegenstande (16) an den Innenseiten zweier, einander gegenüberliegender Wände und durch Stapeleinrichtungen (23, 24, 27, 28) an wenigstens einem Stirnrand der beiden einander gegenüberliegenden Wände zum Übereinanderstapeln mehrerer Behälterteile (21A und 21B).

**Revendications**

1. Casier pour une pluralité d'objets en forme de disques, en particulier des supports d'enregistrement (16), constitué d'un corps de base, muni de deux ouvertures, ayant une pluralité de rainures réceptrices pour les objets et d'au moins une partie couvercle ainsi que des moyens de verrouillage (5—8) amovibles prévus entre le corps de base et la (les) parties couvercle(s), caractérisé par le fait que le corps de base est constitué de deux parties assemblables (1 et 2, 21A et 21B) sensiblement identiques respectivement, et deux autres parties couvercles (3 et 4, 22A et 22B) sont prévues sensiblement identiques respectivement, chaque partie couvercle (3, 4, 22A, 22B) recouvrant, au moins partiellement, au moins une des ouvertures (31, 36) du corps de base (21) et les moyens de verrouillage (5—8) sont prévus au moins sur une partie couvercle (3, 4, 22A, 22B), et grâce auxquels les deux parties (1, 2, 21A et 21B) du corps de base (21) sont verrouillables l'une à l'autre et séparables ensuite.

2. Casier selon la revendication 1, caractérisé par le fait que les parties couvercles (3 et 4, 22A et 22B) possèdent un profil latéral en L et chaque bras du L entourent en profil latéral une face du corps de base.

3. Casier selon la revendication 2, caractérisé par le fait que chaque bras du 1 est muni d'éléments de verrouillage (5, 6, 7, 7A, 19) en particulier d'évidements et les plans latéraux en prise sont munis d'éléments de verrouillage correspondants (5, 6, 7A, 8, 8'), en particulier de saillies.

4. Casier selon la revendication 1 et l'une des revendications 2 à 3, caractérisé par le fait que le bras du L des parties couvercles (22A, 22B) obturant respectivement l'une des ouvertures (35, 36) du corps de base (21) est muni de moyens de retenue (32, 40) associés aux rainures réceptrices du corps de base.

5. Casier selon la revendication 4, caractérisé par le fait que les moyens de retenue sont en forme de dentelures ou indentations.

6. Casier selon la revendication 1, caractérisé par le fait que les parties du corps de base sont munies, au moins au voisinage des au moins deux ouvertures, de moyens d'empilement.

7. Casier selon la revendication 6 caractérisé par le fait que les moyens d'empilement sont des parties de paroi (23, 24, 27, 28, 29, 30) des parties de corps de base (21A, 21B) intercalables les unes aux autres, à plat et/ou spatialement.

8. Casier selon la revendication 6 ou 7, caractérisé par le fait que les moyens d'empilement sont disposés sur les parties de corps de base (21A, 21B) de manière qu'il existe une symétrie par rapport à l'axe médian (38) des profils latéraux ou par rapport au plan médian entre deux parties de corps de base (21A et 21B) empilées l'une sur l'autre.

9. Casier selon les revendications 7 ou 8, caractérisé par le fait que les moyens d'empilement sont des saillies ou des creux disposés comme recouvrement de manière qu'une des deux parties de corps de base (21A et 21B) soit tournée de 180 degrés dans le plan horizontal, par rapport à l'autre partie de corps de base (21B ou 21A) et, après rotation de 180 degrés dans le plan vertical, soit applicable sur l'autre partie de corps de base (21B ou 21A) et provoque la mise en prise des différents éléments d'empilement (23, 24 et 27, 28).

10. Casier selon la revendication 9, caractérisé par les moyens d'empilement sont constitués, au moins partiellement, de nervures (23a et b) et rainures (24a et b) d'étanchéité qui sont prévues sur au moins un bord d'ouverture (25) d'une partie de corps de base (21) et sont parallèles à ce bord (25).

11. Casier selon la revendication 9 ou 10, caractérisé par le fait que les moyens d'empilement sont constitués au moins partiellement, de nervures profilées (27) prévues sur le bord d'ouverture extérieur (26) et d'échancrures correspondantes (28).

12. Casier selon la revendication 11, caractérisé par le fait que des éléments d'appui (29, 30) disposés dans l'épaisseur de paroi sont prévus dans la zone des échancrures (28) et font saillie en hauteur au-dessus du contour de l'échancrure.

13. Casier selon la revendication 11, caractérisé par le fait que, parallèlement au bord d'ouverture extérieur (26), est prévu un bord d'ouverture intérieur (31) qui est obturable, en particulier à la manière d'un capot, par la partie couvercle (27A, 22B).

14. Casier selon la revendication 12, caractérisé par le fait que la hauteur de la partie couvercle (22A, 22B) est, en position d'obturation, plus petite que la hauteur de la nervure profilée (27) ou des éléments d'appui (29, 30).

15. Casier selon la revendication 13, caractérisé par le fait que la partie couvercle, dans la zone de la paroi (9) recouvrant l'ouverture (35, 36) du corps de base (21A, ou 21B) est plus étroite que l'espace (a) séparant l'un de l'autre les grands côtés du bord d'ouverture extérieur (26).

16. Casier selon la revendication 5, caractérisé par le fait que les moyens de retenue sont en forme d'au moins un élément à élasticité de ressort (17), en particulier à section en U ou en cuvette, sur une paroi du L de la paroi couvercle (3, 4, 22A, 22B).

17. Casier selon la revendication 16, caractérisé par le fait que l'élément à élasticité de ressort est une dentelure (17, 18) d'une partie de couvercle (3, 4, 22A, 22B).

18. Casier selon la revendication 1 ou 5, caractérisé par le fait que les nervures réceptrices des parties de corps de base et/ou des contre-pièces (40) sur le moyen de retenue ont une section sensiblement en forme de trapèze.

19. Casier selon la revendication 1, caractérisé par le fait que les fonds des nervures réceptrices sur les parties de corps de base (21A, 21B) présentent, en profil, une forme sensiblement en cercle ou en tangente à un cercle et en particulier une forme en arc de cercle ou tengente à un arc de cercle interrompu.

20. Partie de casier pour casier selon la revendication 1 et l'une des revendications 2 à 19, caractérisée par un bâti sensiblement rectangulaire constitué de parois, par des rainures réceptrices pour objets (16) en forme de disques sur les faces intérieures de deux parois se faisant face et par des moyens d'empilement (23, 24, 27, 28) sur au moins un bord frontal des deux parois qui se font face, pour l'empilement les unes sur les autres de plusieurs parties de casier (21A, 21B).

**Claims**

1. A container for a plurality of disk-shaped articles, in particular recording media (16), consisting of a basic element, which is provided with two or more openings and possesses a plurality of receiving grooves for the articles, and of one or more cover parts and of detachable locking means (5—8) provided between the basic element and the cover part or parts, wherein the basic element consists of two essentially identical parts (1 and 2, 21 A and 21 B) which can be combined, and two further, essentially identical cover parts (3 and 4, 22 A and 22 B) are provided, each cover part (3, 4, 22 A, 22 B) partially or completely covering one or more of the openings (35, 36) in the basic element (21), and the locking means (5—8) with which the two parts (1 and 2, 21 A and 21 B) of the basic element (21) can be detachably locked together being provided on one or both cover parts (3, 4, 22 A, 22 B).

2. A container as claimed in claim 1, wherein the cover parts (3 and 4, 22 A and 22 B), in side elevation, are L-shaped, and each arm of the L-shape embraces one side of the basic element in side elevation.

3. A container as claimed in claim 2, wherein each arm of the L-shape is provided with locking elements (5, 6, 7, 7A, 19), in particular with recesses, and the embraced side surfaces are provided with corresponding locking elements (5, 6, 7A, 8, 8'), in particular with projections.

4. A container as claimed in claim 1 and one or both of claims 2 and 3, wherein each arm of the L-shaped cover parts (22 A, 22 B) which closes an opening (35, 36) in the basic element (21) is provided with holding means (32, 40) associated with the receiving grooves of the basic element.

5. A container as claimed in claim 4, wherein the holding means are in the form of indentations or projections.

6. A container as claimed in claim 1, wherein the parts of the basic element are provided with stacking means, at least in the region of the two or more openings (35, 36).

7. A container as claimed in claim 6, wherein the stacking means are wall parts (23, 24, 27, 28, 29, 30) of the basic element parts (21 A, 21 B), which wall parts are capable of interlocking with one another in two dimensions and/or three-dimensions.

8. A container as claimed in claim 6 or 7, wherein the stacking means of the basic element parts (21 A, 21 B) are arranged so that there is symmetry about the vertical central axis (38) of the side elevation or about the central axis of the three-dimensional arrangement of two basic element parts (21 A and 21 B) stacked one on top of the other.

9. A container as claimed in claim 7 or 8 or 7 and 8, wherein the stacking means are coinciding projections and depressions, which are arranged so that one of the two basic element parts (21 A and 21 B), when rotated through 180° in the horizontal plane with respect to the other basic element part (21 B or 21 A) and then rotated through 180° in the vertical plane, can be placed on top of the other basic element part (21 B or 21 A) and causes the individual stacking elements (23, 24 or 27, 28) to interlock.

10. A container as claimed in claim 9, wherein some or all of the stacking means comprise sealing webs (23a and b) and grooves (24a and b), which are provided on one or more opening edges (25) of a basic element part (21) and parallel to the edge (25).

11. A container as claimed in claim 9 or 10, wherein some or all of the stacking means comprise contoured webs (27), provided on the outer edge (26) of the opening, and corresponding cut-outs (28).

12. A container as claimed in claim 11, wherein supporting elements (29, 30) offset by a distance corresponding to the wall thickness are provided in the region of the cut-outs (28) and project in height beyond the recess contour.

13. A container as claimed in claim 11, wherein an inner opening edge (31), which can be closed by the cover part (22 A, 22 B), in particular in a hood-like manner, is provided parallel to the outer opening edge (26).

14. A container as claimed in claim 12, wherein the height of the cover part (22 A, 22 B) in the closed position is smaller than the height of the contoured web (27) or of the supporting elements (29, 30).

15. A container as claimed in claim 13, wherein, at least in the region of the wall (9) which covers the opening (35, 36) in the basic element part (21 A or 21 B), the cover part is narrower than the distance (a) between the long sides of the outer edge (26) of the opening.

16. A container as claimed in claim 4 or 5, wherein the holding means are in the form of one or more springy elements (17), in particular with a U-shaped or trough-shaped cross-section, on a wall of the L-shaped cover parts (3, 4, 22 A, 22 B).

17. A container as claimed in claim 16, wherein the springy element is an indentation (17, 18) of a cover part (3, 4, 22 A, 22 B).

18. A container as claimed in claim 1 or 5, wherein the receiving grooves of the basic element parts and/or the counterpieces (40) on the holding means have a roughly trapezoidal cross-section.

19. A container as claimed in claim 1, wherein the bottom of the receiving grooves on the basic element parts (21A, 21B) have a roughly circular or tangential outline, in particular an interrupted circular or tangential outline.

20. A container part for a container as claimed in claim 1 or one or more of claims 2 to 19, which comprises a roughly rectangular frame consisting of walls, comprises receiving grooves on the insides of two opposite walls, for the disk-shaped articles (16), and comprises stacking means (23, 24, 27, 28) on one or more end edges of the two opposite walls, for stacking a plurality of container parts (21A and 21B) one on top of the other.

# FIG. 1

# FIG. 3

# FIG. 2

FIG. 6

FIG. 7

FIG. 8

EP 0 208 062 B1

# FIG. 11

# FIG. 12

# FIG. 13

## FIG. 14a

28 — 27

21A

21 —

21B

21A

21 —

21B

27

## FIG. 14b

27 — 28

21A

21 —

21B

21A

21 —

21B

28